# EUROPEAN PATENT SPECIFICATION

(11) **EP 1 331 565 B1**
(45) Date of publication and mention of the grant of the patent: **12.09.2018**
(21) Application number: 02290195.3
(22) Date of filing: 29.01.2002
(51) Int. Cl.: G06F 11/34

(54) **Application execution profiling in conjunction with a virtual machine**
Profilieren von Anwendungsausführung in Verbindung mit einer virtuellen Machine
Etablissement de profil d'exécution d'applications en conjonction avec une machine virtuelle

(43) Date of publication of application: 30.07.2003
(73) Proprietor: TEXAS INSTRUMENTS FRANCE, 06271 Villeneuve Loubet Cedex, Nice (FR); Texas Instruments Incorporated, Dallas, Texas 75251 (US); INRIA - Institut National de Recherche en Informatique et en Automatique, 78153 Le Chesnay Cedex (FR)
(72) Inventor: Lasserre, Serge, Frejus 83600 Lieudit St Jean de Cannes (FR); D'Inverno, Dominique, 06270 Nice Villeneuve-Loubet (FR); Chauvel, Gérard, 06600 Antibes Antibes (FR); Cabillic, Gilbert, 35230 Noyal Chatillon sur Seiche (FR); Lesot, Jean Philippe, 35370 Etrelles (FR); Banatre, Michel, 35111 La Fresnais (FR); Parain, Frédéric, 35000 Rennes (FR); Routeau, Jean-Paul, 35235 Thorigne-Fouillard (FR)
(74) Representative: Zeller, Andreas

(56) References cited:
- TIA NEWHALL AND BARTON P. MILLER: "Performance Measurement of Dynamically Compiled Java Executions" 1999 ACM JAVA GRANDE CONFERENCE, June 1999 (1999-06), XP002206028 Palo Alto, USA
- RADHAKRISHNAN R ET AL: "Characterization of Java applications at bytecode and ultra-SPARC machine code levels" COMPUTER DESIGN, 1999. (ICCD '99). INTERNATIONAL CONFERENCE ON AUSTIN, TX, USA 10-13 OCT. 1999, LOS ALAMITOS, CA, USA,IEEE COMPUT. SOC, US, 10 October 1999 (1999-10-10), pages 281-284, XP010360576 ISBN: 0-7695-0406-X
- J. HORGAN, J. POWER AND J. WALDRON: "Measurement and Analysis of Runtime Profiling Data for Java Programs" IEEE INTERNATIONAL WORKSHOP ON SOURCE CODE ANALYSIS AND MANIPULATION,, 10 October 2001 (2001-10-10), XP002206029 Florence, Italy
- ZHANG XIAOLAN ET AL: "HBench:Java: An Application-Specific Benchmarking Framework for Java Virtual Machines", PROCEEDINGS OF THE ACM 2000 CONFERENCE ON JAVA GRANDE (JAVA 2000). SAN FRANCISCO, CALIFORNIA, USA, JUNE 03-04, 2000,, no. 62-70, 3 June 2000 (2000-06-03), XP007902228, ISBN: 978-1-58113-288-5

## Description

### TECHNICAL FIELD OF THE INVENTION

This invention relates in general to processing devices and, more particularly, to profiling application execution on devices using a virtual machine.

### DESCRIPTION OF THE RELATED ART

Many applications operate in conjunction with a "virtual machine". The best-known virtual machine is the JAVA virtual machine, or JVM. A virtual machine is a layer of software that resides between applications and the physical hardware platform and operating system.

A virtual machine is instrumental in providing portability of applications. For example, in JAVA, the JVM defines a virtual platform for which all JAVA programs may be written. The virtual platform is the same regardless of the actual hardware executing the JVM. Accordingly, the programmer can write an application directed to the JVM without knowledge of the underlying hardware.

JAVA programs are compiled into "byte-codes", which can be thought of as the machine language of the JVM. The JVM executes the byte-codes just as a processor executes machine code; however, the byte-codes do not directly control the underlying hardware. Instead, they are interpreted by the JVM, which generates the instructions to the underlying hardware.

While the JVM is the most well-known virtual machine, other platform-independent languages use a similar structure.

To optimize an application, estimations of execution time or energy consumption are often needed. This is particularly true in the case of mobile devices, such as smart phones, personal digital assistants, and the like, which have limited energy and processing resources. When programming for a virtual machine, however, the underlying hardware is masked from the programmer. Accordingly, optimization is more difficult, particularly if the application is meant for multiple hardware platforms. Often, the application must be tested on the actual hardware platform to obtain accurate estimates.

The paper by Tia Newall and Barton P. Miller "Performance Measurement of Dynamically Compiled Java Executions" 199 ACM Java Grande Conference, June 1999(1999-06), XP002206028 Palo Alto, USA describes those aspects of dynamically compiled Java executions that make performance measurement difficult and an experimental version of a performance tool that describes performance data in terms of the multiple execution forms of a method, costs of the dynamic compilation and costs of residual dependencies of the application on the virtual machine. The paper by J Horgan, J Power and J Waldron, "Measurement and Analysis of Runtime Profiling of Data for Java Programs" IEEE International Workshop on Source Code Analysis and Manipulation, 10 October 2001 (2001-10-10), XP002206029, Florence, Italy describes a process and an associated metric for the investigation of data collected from the dynamic analysis of Java bytecode and presents a comparison of programs in a benchmark suite and a comparison of the effects of various Java compilers on the generated bytecode. ZHANG XIAOLAN ET AL: "HBench: Java: An Application-Specific Benchmarking Framework for Java Virtual Machines", (PROCEEDINGS OF THE ACM 2000 CONFERENCE ON JAVA GRANDE (JAVA 2000). USA, no. 62-70, 3 June 2000) employs a methodology that uses vectors to characterize the application and the underlying JVM and carefully combines the two vectors to form a single metric that reflects a specific application's performance on a particular JVM. Therefore, a need has arisen for a method and apparatus for reliably estimating performance characteristics, such as execution time and energy, in a device using a virtual machine interface.

### BRIEF SUMMARY OF THE INVENTION

The present invention provides a method of and an apparatus for estimating performance for a specified portion of an application, where the specified portion can include all or part of the application, that executes on a target device via a virtual machine interface as set out in the appended claims.

The present invention provides significant advantages over the prior art. By independently generating the application profile, based on the number of times operations are executed in the application, and the virtual machine
profile, based on actual hardware response on the target device, an accurate estimation of a performance criteria, such as average time, maximum time, or energy consumption, for the application can be provided. The application profile can be generated on an application development platform and used for optimizing an application and can be downloaded to the target device for scheduling and other purposes. The application profile can also be generated on the target device itself upon the first execution of the application. The virtual machine profile can be generated one time on a target device with a specialized virtual machine and used by software development platforms and operating target devices.

### BRIEF DESCRIPTION OF THE SEVERAL VIEWS OF THE DRAWINGS

For a more complete understanding of the present invention, reference is now made to the following descriptions taken in conjunction with the accompanying drawings, in which:
Figure 1a illustrates a depiction of the generation of an application profile;
Figure 1b illustrates a depiction of the generation of a virtual machine profile;
Figure 1c illustrates a depiction of an estimation based on the application and virtual machine profiles;
Figure 2 is a state diagram describing the generation of an application profile;
Figure 3a is a state diagram describing the generation timing information for a virtual machine profile;
Figure 3b is a state diagram describing the generation energy information for a virtual machine profile; and
Figure 4 illustrates timing factors in computing elapsed time.

### DETAILED DESCRIPTION OF THE INVENTION

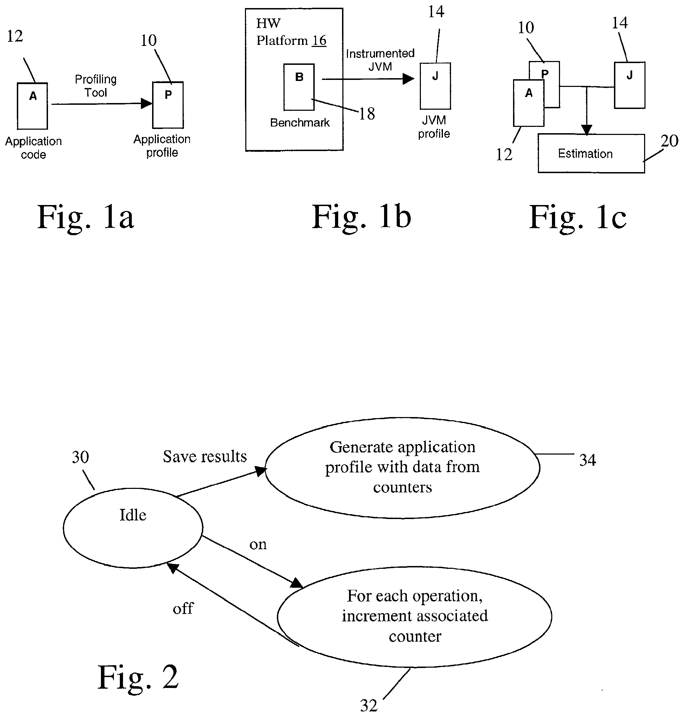

The present invention is best understood in relation to Figures 1 - 4 of the drawings, like numerals being used for like elements of the various drawings.

For purposes of illustration, the invention will be discussed in terms of a JAVA application running on a JVM, although the techniques described herein apply to any architecture using a virtual machine interface.

Figures 1a through 1c illustrate a generalized description of the invention. In Figure 1a, an application profile 10 is generated from an application 12. The application profile 10 is a byte-code based profile which indicates how many times each operation (such as a byte-code or a native method) is used during execution of the application 12, or in specified parts of the application 12. The application profile 10 may be generated on a development system by the software developer or it may be generated on the target device upon the first execution of the application.

In Figure 1b, a JVM profile 14 is generated for a specific hardware platform 16 using a benchmark program 18. The JVM profile 14 provides information indicative of a performance characteristic of the underlying target hardware for each particular operation. The performance characteristic may be the time necessary to execute each particular operation and/or the energy expended by the hardware platform 16 in executing each particular operation, but also could involve other performance characteristics such as bandwidth occupation of different memory modules, cache misses occurrences, TLB misses and so on. Any performance characteristic that can be measured in relation to an operation can be used if a JVM profile 14; for purposes of illustration, however, implementation of the invention will be discussed herein with regard to operation execution time and energy consumption. In general, a JVM profile can be generated by the designer of the JVM for a respective hardware platform and used for multiple software development platforms and operating devices.

In Figure 1c, the information in the application profile 10 and the information in the JVM profile 14 are combined to generate a performance estimate 20. The estimate 20 may be generated on an application development system, to aid the programmer in optimizing the application for the target device, or on an operating target device, to aid in efficient operation of the device.

The application profile 10 specifies the number of times each possible operation is executed during execution of the execution of application 12. There may be several different application profiles 10 to accommodate different operating conditions. For example, a video codec may have a one application profile for receiving a 24-bit color video file and another application profile for receiving an 8-bit color video file.

The application profile 14 may be generated by the programmer, or may be generated upon the first execution of the application on the host device. By multiplying the number of times each operation is used in execution of the application (as specified in the application profile 10) by the energy/time consumed by the operation (as specified in the JVM profile 14) and summing the results for all such operations, a very accurate estimation of the time/energy used by the application can be generated. The time/energy information can be used for a number of purposes.

Figure 2 illustrates a general state diagram showing the generation of a application profile 10. Starting from an idle state 30, an *on* command (described in greater detail below) in the application begins the profiling of the application 12 in state 32. At this point, the execution of each operation in the application 12 increments a counter associated with the particular operation. Each executed operation is counted until an *off* command (described below) is received. A *save results* command causes the values of the counters to be stored in a file in state 34.

In generating the application profile 10, it is important to provide enough information to deduce real execution time. It is therefore important to have a careful understanding of the operations. For example, there are 201 byte-codes supported by a standard JVM (some JVMs may support additional byte-codes). Some byte-codes realize arithmetic operations, some perform PC (program counter) modifications, some manage the stack, some load-store between the stack, the local variables and the object heap, and some manage objects. Most byte-codes are regular in their operation. But *wide* byte-codes and *invocation* byte-codes are special cases that must be handled differently than other byte-codes.

With regard to wide byte-codes, in JAVA, there are two specific memory zones associated to each method: one local variable zone and one stack. The local variable zone contains input parameters and private data of the method. The stack is used to store the input and output data needed to realize the byte-codes. A set of byte-codes permits the exchange of data between the local variable zone and the stack. Data is located to a specific index in the local variable zone. *Iload* realizes the pop of a byte from the stack to obtain the index. In the specification of the JVM, the index of local variable index is limited to 255 (byte precision). The byte-code *wide* has been introduced to access an index up to 65535. For example, if the byte-code sequence is *wide iload,* the JVM pops two byte values from the stack to determine the index of the data in the local variable zone. Therefore, a *wide iload* takes more time than an *iload.* Moreover, the *wide* byte-code influences two other byte-codes: *ret* and *iinc.* A *wide iinc* sequence increments by one the local variable identified using two bytes, and not only one (as it does without *wide).* The *ret* byte-code is used to end a subroutine. Its action is simple; it pops one byte value on the stack, calculates the return address and modifies the PC of the JAVA method. In order to support more than 255 offsets (for the return address), *wide ret* sequence will increase the PC modification using a two-byte value. Accordingly, byte-codes that have a *wide* variant must be separately monitored for wide and normal behavior.

*Invocation* byte-codes realize the execution of another method. The called method can be composed of JAVA byte-codes or can be a native method. In the case of a native method, its execution time depends directly on the native implementation because as the invocation is synchronous, the time needed to complete the invocation depends on the native method implementation. Accordingly, it is necessary to distinguish *invocation* opcodes that invokes native methods from the others.

Thus, in order to be accurate, the content of the application profiles 10 need to provide: (1) one entry for each java byte-code except for *wide,* (2) one entry for each *wide* dependant byte-code (*wide load* based, *wide store* based, *wide ret, and wide iinc*), (3) one entry for the native invocation byte-code and (4) one entry for each available native method.

The application profile 10, JVM profile 14 and the real execution time/energy estimation 20 can be generated through the use of several APIs (application program interface).

The application profile 10 documents the number of times each standard JAVA byte-code (with and without *wide*) is executed and the number of times each native method of the JVM is executed. Collectively, the byte-codes and native methods are referred to herein as the "operations". In other virtual machines, there may be different or additional operations.

To calculate the application profile 10, the application 12 is executed with a JVM, which is instrumented to count each operation and calculate the profile. The JVM which is used to generate the profile is referred to as the "profiling tool". ProfilerApplication APIs are defined in order to generate the application's profile as shown in Table 1. Using this API, it is possible to document the profiling of several code sequences of an application. For example, if two different loops of an application need profiling, the APIs indicate to the profiler JVM which loop is being executed in order to update its profile.

**Table 1: Application Profiler API**

| Constructor Summary |
|---|
| ProfilerApplication(int **numSequences**) |
| Creation of ProfilerApplication object. This constructor creates the JVM memory space needed to generate **numSequences** byte-code based profiles. |
| Method Summary |
| void on(int **idSequence**) |
| After this call, each executed operation is counted in the profile of code sequence **idSequence.** If the profiling of the code sequence was suspended, it is resumed. |
| void off(int **idSequence**) |
| After this call, the profiling of code sequence **idSequence** is suspended. |
| void end(int **idSequence**) |
| This call indicates that the profile of the code sequence **idSequence** is ended. The JVM increments the number of code sequence profiling that will permit the calculation of the average application profile for this code sequence. |
| void saveResults(java.lang.String **nameFile**) |
| This call produces the ApplicationProfile in the file **nameFile.**java. For each code sequence it generates the average profile by dividing the calculated profile of the code sequence by the number of time each code sequence has been executed. |

These APIs are simple to use. First, it is necessary to create a *ProfileApplication* object by indicating the number of code sequences to profile. The *on* method engages the profiling of the *idSequence* code sequence, and *off* method stops it. Several *on* and *off* sequences can be performed until an *end* method invocation is done. This method increments the number of times a profile for the code sequence *idSequence* has been generated. Before ending the application, *saveResults* method creates a file named *nameFile.java,* which contains the average application profile for each code sequence.

A simple JAVA application is set forth below:

```
     Main(String[ ] args) {
     while(true)
     {
     loop0() ;
     loop1();
     }
     }
```

The APIs are added to the code to obtain separate profiles of the two loops, loop0 and loop1:

```
     Import scratchy.profiler.*;
     Main(String[ ] args) {
     ProfilerApplication pApp = new AppProfile(2);
     for(int i=0; i<20; i++)
     {
     pApp.on(0);
     loop0();
     pApp.off(0) ;
     pApp.end(0) ;
     pApp.on(1);
     loop1() ;
     pApp.off(1) ;
     pApp.end(1);
     }
     pApp.saveResults("MyAppProfile");
     }
```

The *on* and *off* methods start and stop the profiling for each loop. After twenty iterations, the profiling is ended and the results saved. The generated file is:

```
     Class MyAppProfile extends
 scratchy.profiler.ProfilerExecution {
     int number codeSequences=2;
     long[ ][ ] profile = { {12,45,23,0,1,32 ... },
 {11,0,0,0,4, ...} } ;
     }
```

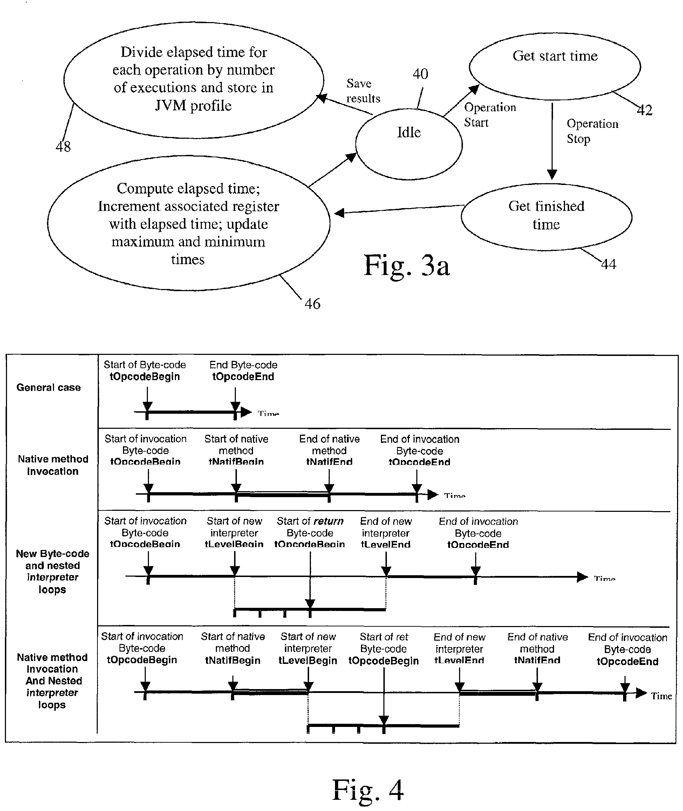

The JVM profile 14 contains an execution time/energy estimate for each operation - for JAVA, byte-codes (with and without *wide*) and native methods. A general state diagram illustrating the generation of time estimates for each operation is shown in Figure 3a.

From initial state 40, upon the start of an operation, a start time is determined in state 42. At the end of the operation, a stop time is determined in state 44. An elapsed time is computed in state 46 and the register associated with the particular operation is incremented by the amount of the elapsed time. In the preferred embodiment, maximum and minimum execution times associated with the operation are maintained as well. This sequence is repeated for each operation execution. When a *save results* command is received, the average elapsed time for each operation is stored in the JVM profile in state 48. As described below in connection with Figure 4, the criteria for determining an elapsed time may vary depending upon several factors.

To obtain the profile, a set of APIs are used that control internal profiling of byte-codes and native methods. A specialized JVM is instrumented to record stopping and starting times; typically, this JVM is different than the one used in determining the application profile 10. The APIs are shown in Table 2.

**Table 2: JVM Profiler API**

| Constructor Summary |
|---|
| ProfilerJvm( ) |
| Creation of ProfilerJvm object. |

| Method Summary |
|---|
| void on () |
| Activate or Re-activate the JVM profiling |
| void off() |
| Deactivate the JVM profiling |
| void saveResults() |
| Generates a file "jvmProfile.java" which contains the JVM Profile. |

The *on* call activates profiling and the *off* call stops profiling. Several sequences of *on* and *off* can be done during the application execution. The *saveResult* call generates a file named *jvmProfile.java* that contains the JVM profile 14.

To generate the JVM profile 14, a benchmark uses the APIs and executes all the byte-codes (with and without *wide)* and all the native methods many times. Experimentation using at least 10000 repetitions have been found to produce accurate results. A sample of the benchmark is shown below:

```
     Import scratchy.profiler.*;
     Main(String[ ] args) {
     ProfilerJvm pJvm = new ProfilerJvm();
     System.println("Benchmarking Logic");
     pJvm.on() ;
     BenchLogic() ;
     pjvm.off() ;
     System.println("Benchmarking Integers");
     pJvm.on();
     BenchIntegers();
     pjvm.off();
     pjvm.saveResults() ;
     }
```

With the use of this benchmark, the JVM profile is generated easily. In the illustrated embodiment, the benchmark uses two routines BenchLogic() and BenchIntegers() for profiling; BenchLogic() profiles the program control flow operations and BenchIntegers() profiles the arithmetic operations. The design of the benchmark is dependent upon the design of the particular JVM. Because the execution characteristics of a particular operation may depend upon a number of factors, such as cache misses and so on, it is up to the designer of the benchmark to account for different critical situations that may arise. The benchmark may be composed of some constant fields that permit configuration of the execution context of the byte-codes. For example, it may be desirable to configure the number of input and output parameters and the number of private variables needed to execute a method because these parameters may influence the execution time of the invocation. Therefore, in order to obtain an average execution case of the native methods these constant fields permit adaptation of the execution context of each native method.

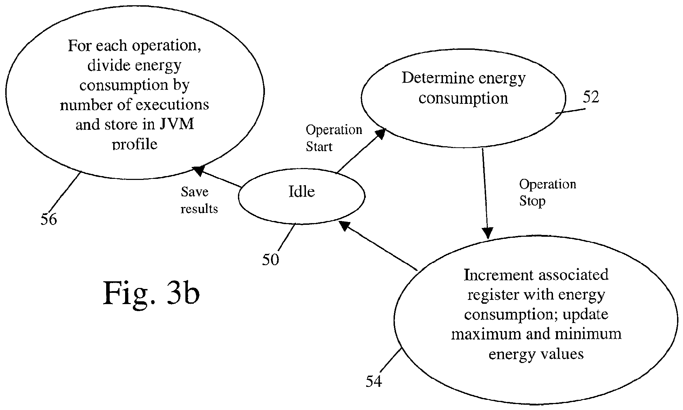

As shown in Figure 3b, information on energy consumption can also be stored in the JVM profile 14. From idle state 50, an operation start indicator begins a determination of the energy being used by the operation in state 52. The energy consumption data could be based on resources used by the operation and the time of execution. When the operation is completed, the register associated with the operation is incremented by the estimation of the energy consumed in state 54. In the preferred embodiment, maximum and minimum execution times associated with the operation are maintained as well. The energy consumption calculations are performed for each operation. Upon receiving the *save results* command, the average energy consumption is calculated for each operation and is stored in the JVM profile (state 56).

For obtaining the real estimations 20, ProfilerExecution APIs are implemented as shown in Table 3. After making a new instance of an execution's profiler object, a call to *getEstimation(int idSequence)* method returns the execution time in nanoseconds of the code sequence *idSequence.* This call realizes, for each code sequence, the sum of the multiplication of each entry of the application profile 10 by each entry of the JVM profile 14. These APIs can be implemented in pure Java code.

**Table 3: Profiler Execution APIs**

| Constructor Summary |
|---|
| ProfilerExecution() |
| Creation of object ProfilerExecution. |
| Method Summary |
| int getExecutionTime(int **idSequence**) |
| Returns the execution time in nanoseconds of code sequence **idSequence.** |

These APIs can be used on the real target or on the host development desktop. An example of use of these APIs is shown on below:

```
     Import scratchy.profiler.*;
     Main(String[ ] args) {
     MyAppProfile pApp = new MyAppProfile();
     int exectimeLoop0 = pApp.getExecutionTime(0);
     int exectimeLoop1 = pApp.getExecutionTime(1);
     if ((exectimeLoop0+exectimeLoop1))>=100000
 System.exit() ;
     while(true)
     {
     loop0() ;
     loop1() ;
     }
     }
```

In this example, the application uses the estimations to resume its execution only if the estimated time of the two internal loops is less than 100000 nanoseconds. The call *new MyAppProfile* inside the main of the application guaranty that the application's profile class file is linked within the application class files. Moreover, when executed, and due to the inheritance of ProfilerExecution class (see above) the method *getExecutionTime* is offered transparently.

In order to support the application profiling APIs, two modifications inside a JVM are required. The JVM for calculating estimations on time/energy performance is typically separate from the JVM used for generating the application profile 10 or the JVM profile 14. Initially, C structures are added to JVM for obtaining profiles:

```
     struct oneSequence {
       long long sumProfile[270];
       int numberExecution;
       char onOffBoolean;
     };
     struct profileApplication {
       int numberSequences;
       int idActiveSequence;
       struct oneSequence *sequences;
     };
```

The profiler JVM counts the number of times of each operation is executed. Therefore, it is necessary to instrument the main interpreter loop. As shown below, before each byte-code execution, a call to *profilerExecOpcode* procedure counts the current executed byte-code:

```
     Interpreter()
     {
       while(1)
       {
         profilerExecOpcode(*pc) ;
          switch (*pc++)
          {
          ...
        }
       }
     }
```

Second, there must also be a count of the number of executions of each native method. A simple modification of the invocation opcode, shown below, permits the detection of which native method is being executed:

```
     Invocation {
     ..
     profilerExecNatif(id) ;
     callNativeMethod(ptr)
     ..
     }
```

Structure *sequences* is allocated at the same time the object ApplicationProfiler is created. *IdActiveSequence* indicates the current codeSequence being profiled. For each code sequence, *onOffBoolean* indicates if the profile is active or not. *NumberSequences* stores the number of times the profile has been used for a particular code sequence in order to calculate its average profile. Each time a byte-code or a native method is executed, the corresponding entry in *sumProfile* is incremented by one. This is why *sumProfile* is composed of 270 entries (200 byte-codes without wide, 12 byte-codes with wide support, 4 entries for each native invocation byte-code and finally one entry for each of the native methods of the JVM; in this case, it is assumed that there are 54 native methods, although a particular implementation may use more or less).

In order to have execution times of Java byte-codes, the time before the execution of the byte-code and the time after its execution must be measured properly. As shown of Figure 3a (general case) the execution time of a byte-code is (*tOpcodeEnd-tOpcodeBegin*), and with a simple modification of the main interpreter loop, these times can be easily obtained. But to be accurate, some cases must be measured differently, as shown in Figure 4.

The first special case is native method invocation. During the execution of an invocation byte-code, if the method to invoke is a native one, the time between (*tOpcodeEnd-tOpcodeBegin*) will include the time of the native method execution. Accordingly, in the case of a native method invocation, as the execution time of the native method is (*tNativeEnd-tNativeBegin*), the execution time of a method native invocation byte-code will be (*tOpcodeEnd-tOpcodeBegin*) - (*tNativeEnd-tNativeBegin*)*.*

The second special case involves new byte-code and nested interpreter loops. When executing a new byte-code, another interpreter loop is executed in order to run the *<clinit>* method that initializes the object. In this particular case, the time before entering the new interpreter level (*tLevelBegin*) and the time at the return from it (*tLevelEnd*) are measured. The execution time taken by the new interpreter loop is then (*tLevelEnd-tLevelBegin*) and the execution time of the new byte-code is (*tOpcodeEnd-tOpcodeBegin)* - (*tLevelEnd-tLevelBegin*)*.* As shown in Figure 6, a *return* based byte-code is done to return to the previous interpreter loop. In this case, the execution of the return byte-code is (*tLevelEnd-tOpcodeBegin),* with the *tOpcodeBegin* of the return byte-code interpreter loop level.

The third special case involves native method invocation and nested interpreter loops. During an execution of a native method, it is also possible to execute another interpreter loop using JNI (JAVA Native Interface) interface calls. In this case, the execution time of the native method is (*tNativeEnd-tNativeBegin)-(tLevelEnd-tLevelBegin*).

To obtain times in this circumstance, an instrumentation of a JVM can be done such that there is one modification in the main interpreter loop, another in the native invocation call and finally one inside the call that launches a new interpreter loop. Moreover, using levels of interpreters, it is possible to support several nested interpreters.

Table 4 summarizes the names of the times taken and Table 5 gives the estimated time for a byte-code and a native method according to these times.

**Table 4: Description of measured times**

| Time | **Designation** |
|---|---|
| tOpcodeBeginₗₑᵥₑₗ | Time taken before the byte-code execution in a specific interpreter loop level |
| tOpcodeEndₗₑᵥₑₗ | Time taken after the byte-code execution in a specific interpreter loop level |
| **tLevelBegin**ₗₑᵥₑₗ | Time taken before entering a new interpreter loop level |
| **tLevelEnd**ₗₑᵥₑₗ | Time taken after the execution of a higher interpreter loop level |
| **tNatifBegin**ₗₑᵥₑₗ | Time taken before the native call in a specific interpreter loop level |
| **tNatifEnd**ₗₑᵥₑₗ | Time taken after the native call in a specific interpreter loop level |

**Table 5: Byte-code estimation times according to measured times**

| Type | Corresponding estimation times |
|---|---|
| Native methods | (tNatifEndₗₑᵥₑₗ - tNatifBeginₗₑᵥₑₗ) - (tLevelEndₗₑᵥₑₗ - tLevelBeginₗₑᵥₑₗ) |
| Byte-codes | Except for Return if nested in an interpreter loop : |
| | (tOpcodeEndₗₑᵥₑₗ - tOpcodeBeginₗₑᵥₑₗ) - (tNatifEndₗₑᵥₑₗ - tNatifBeginₗₑᵥₑₗ) - (tLevelEndₗₑᵥₑₗ - tLevelBeginₗₑᵥₑₗ) |
| | for Return if nested in an interpreter loop : |
| | (tLevelEndₗₑᵥₑₗ₋₁ - tOpcodeBeginₗₑᵥₑₗ) |

The most important advantage of the profiling is the separation of two isolated and independent parts the profiling of an application, i.e., separate application and virtual machine profiling. This allows, for example, optimization work to be done on the application without an identified target hardware platform. On the other hand, work on the JVM can be done for obtaining a better performance, and a better JVM profile 14.

Another important point is that the application profile 10 and the JVM profile 14 are class files and can be downloaded through a network. From the target hardware's perspective, estimation can be deduced after the download of an application, either through downloading the application profile 10 or by generating an application profile 10 upon the first execution. Further, the host development station can download desired JVM profiles 14 for different hardware platforms. This way, an application designer can optimize its application for several targets.

Another perspective of this work is to adapt the JVM profile 14 in order to obtain energy consumption estimations of a JAVA application. Instead of (or in addition to) profiling the execution time on the target, the estimation of energy consumption could be performed using the same principles as for execution time. This is a real discontinuity in embedded application development cycle where a huge instrumentation and lots of tools are needed to obtain these estimations. The energy performance (and execution time performance) could be used by the target device for scheduling applications, as described in connection with EP Serial No. 99402655.7, filed on October 25, 1999, for "Intelligent Power Management for Distributed Processing Systems" (U.S. Ser. No. 09/696,052, filed October 25, 2000, for "Intelligent Power Management for Distributed Processing Systems" to Chauvel et al).

Just in time compilers may improve performance due to their sophisticated optimizations created dynamically. The profiling techniques described herein could be adapted to take into account an interpreter-based execution and a JIT one.

Another very interesting perspective of the profiling technique is to estimate Worst Case Execution Times (WCET) of JAVA applications. As it is possible, using existing techniques, to generate the WCET for the application profile 10 and the WCET for each operation execution in the JVM profile 14, it is possible to obtain the WCET estimate for the application. Similarly, a best case execution time could be obtained as well.

Finally, as the profiling tool is a JVM that calculates the application profile 10 by the execution of the application, the application profile can be generated on the fly after the download of the application. Then, after the first execution, an estimation can be delivered. Moreover, as there is only the main interpreter loop and the native call that are instrumented, the overhead in terms of performance is not too important and will only concern the first execution. In the specific case of stream based applications, in which there are important time variations due to the kind of data received, a dynamic profiling will permit to adjust dynamically the execution time estimation with a small overhead.

Although the Detailed Description of the invention has been directed to certain exemplary embodiments, various modifications of these embodiments, as well as alternative embodiments, will be suggested to those skilled in the art. The invention encompasses any modifications or alternative embodiments.

## Claims

1. A method of estimating performance for a specified portion of an application (12), where said specified portion can include all or part of said application (12), that executes on a target device via a virtual machine interface, said method comprising:
acquiring an application profile (10) that specifies the number of times each different operation is executed during execution of said specified portion of said application (12) wherein said application profile comprises one data entry for each byte-code except wide, one entry for each wide dependant byte-code, one entry for each native invocation byte-code and one entry for each native method of the virtual machine and wherein the application profile (10) is class files downloadable over a network;
acquiring a virtual machine profile (14) that specifies information indicative of a performance characteristic of the target device hardware (16) for each operation of said application (12); wherein said virtual machine profile (14) is class files downloadable over a network; and
multiplying the number of times each operation is executed during execution of said specified portion of said application as specified in said application profile (10) by said performance characteristic for that operation as specified in said virtual machine profile (14) and summing the results for all operations to generate a performance estimate (20) for said specified portion of said application (12) .

2. The method of claim 1, wherein acquiring said virtual machine profile (14) comprises:
acquiring a virtual machine profile (14) that relates average execution time to individual operations.

3. The method of claim 1, wherein acquiring said virtual machine profile comprises:
acquiring a virtual machine profile (14) that relates maximum execution time to individual operations.

4. The method of claim 1, wherein acquiring said virtual machine profile comprises:
acquiring a virtual machine profile (14) that relates minimum execution time to individual operations.

5. The method of claim 1, wherein acquiring said virtual machine profile comprises:
acquiring a virtual machine profile (14) that relates power consumption to individual operations.

6. The method of claim 1, wherein acquiring said virtual machine profile comprises:
generating a virtual machine profile (14) that measures said performance characteristic during execution of a benchmark program (18) on said target device (16).

7. The method of claim 1, wherein acquiring said virtual machine profile (14) comprises:
downloading a previously generated virtual machine profile (14) that measures said performance characteristic during execution of a benchmark program (18) on said target device (16).

8. The method of any of claims 1-7, wherein acquiring said application profile (10) comprises:
generating an application profile that specifies the number of times each different operation is executed during execution of the specified portion of the application (12) on an application development platform and downloading the generated application profile to the target device (16).

9. The method of any of claims 1-7, wherein acquiring said application profile comprises: generating an application profile (10) that specifies the number of times each different operation is executed during execution of the specified portion of the application (12) on first execution of the application (12) on the target device.

10. The method of any of claims 8 or 9 further comprising: generating a plurality of application profiles (10), wherein different operation conditions are accommodated by different application profiles (10).

11. Apparatus for estimating performance for a specified portion of an application (12), where said specified portion can include all or part of said application (12), that executes on a target device (16) via a virtual machine interface, whose circuitry comprises circuitry arranged to acquire an application profile (10) that specifies the number of times each different operation is executed during execution of said specified portion of said application (12), wherein said profile comprises one data entry for each byte-code except wide, one entry for each wide dependant byte-code, one entry for each native invocation byte-code and one entry for each native method of the virtual machine and wherein said application profile (10) is class files downloadable over a network;
circuitry arranged to acquire a virtual machine profile (14) that specifies information indicative of a performance characteristic of the target device hardware (16) for each operation of said application (12) wherein said virtual machine profile (14) is class files downloadable over a network; and
circuitry arranged to multiply the number of times each operation is executed during execution of said specified portion of said application as specified in said application profile (10) by the performance characteristic for that operation as specified in said virtual machine profile (14) and to sum the results for all operations to generate a performance estimate (20) for said specified portion of said application (12).

12. The apparatus of claim 11, wherein said circuitry arranged to acquire a virtual machine profile (14) comprises circuitry arranged to acquire a virtual machine profile (14) that relates average execution time to individual operations.

13. The apparatus of claim 11, wherein said circuitry arranged to acquire a virtual machine profile (14) comprises circuitry arranged to acquire a virtual machine profile (14) that relates maximum execution time to individual operations.

14. The apparatus of claim 11, wherein said circuitry arranged to acquire a virtual machine profile (14) comprises circuitry arranged to acquire a virtual machine profile (14) that relates minimum execution time to individual operations.

15. The apparatus of claim 11, wherein said circuitry arranged to acquire a virtual machine profile (14) comprises circuitry arranged to acquire a virtual machine profile (14) that relates power consumption to individual operations.

16. The apparatus of claim 11, wherein said circuitry arranged to acquire a virtual machine profile (14) comprises circuitry arranged to generate a virtual machine profile (14) that measures said performance characteristic during execution of a benchmark program (18) on said target device.

17. The apparatus of claim 11, wherein said circuitry arranged to acquire a virtual machine profile (14) comprises circuitry arranged to download a previously generated virtual machine profile (14) that measures said performance characteristic during execution of a benchmark program (18) on said target device.

18. The apparatus of any of claims 11-17, wherein said circuitry arranged to acquire an application profile (10) comprises circuitry arranged to generate an application profile (10) that specifies the number of times each different operation is executed during execution of the specified portion of the application (12) on an application development platform and to download the generated application profile to the target device (16).

19. The apparatus of any of claims 11-17, wherein said circuitry arranged to acquire an application profile (10) comprises circuitry arranged to generate an application profile (10) that specifies the number of times each different operation is executed during execution of the specified portion of the application (12) on first execution of the application (12) on the target device.

20. The apparatus of any of claims 18 or 19, comprising circuitry arranged to generate a plurality of application profiles (10), wherein different operation conditions are accommodated by different application profiles (10).

## Patentansprüche

1. Verfahren zum Abschätzen der Leistung für einen angegebenen Teil einer Applikation (12), wobei der angegebene Teil alles oder einen Teil der Applikation (12) enthalten kann, die über eine virtuelle Maschinenschnittstelle auf einem Zielgerät ausgeführt wird, wobei das Verfahren Folgendes umfasst:
Erfassen eines Applikationsprofils (10), das angibt, wie oft jede unterschiedliche Operation während der Ausführung des angegebenen Teils der Applikation (12) ausgeführt wird, wobei das Applikationsprofil jeweils einen Dateneintrag für jeden Bytecode außer weit, einen Eintrag für jeden weiten abhängigen Bytecode, einen Eintrag für jeden Bytecode mit nativem Aufruf und einen Eintrag für jedes native Verfahren der virtuellen Maschine umfasst, und wobei das Applikationsprofil (10) Klassendateien darstellt, die über ein Netzwerk herunterladbar sind;
Erfassen eines virtuellen Maschinenprofils (14), das Informationen angibt, die indikativ für ein Leistungsmerkmal der Zielgeräte-Hardware (16) für jede Operation der Applikation (12) sind; wobei das virtuelle Maschinenprofil (14) Klassendateien darstellt, die über ein Netzwerk herunterladbar sind; und
Multiplizieren der Anzahl der Ausführung jeder Operation während der Ausführung des angegebenen Teils der Applikation, wie im Applikationsprofil (10) durch das Leistungsmerkmal für die betreffende Operation angegeben, wie im virtuellen Maschinenprofil (14) angegeben, und Summieren der Ergebnisse für alle Operationen, um eine Leistungsschätzung (20) für den angegebenen Teil der Applikation (12) zu erzeugen.

2. Verfahren nach Anspruch 1, wobei das Erfassen des virtuellen Maschinenprofils (14) Folgendes umfasst:
Erfassen eines virtuellen Maschinenprofils (14), das die durchschnittliche Ausführungszeit mit individuellen Operationen in Beziehung bringt.

3. Verfahren nach Anspruch 1, wobei das Erfassen des virtuellen Maschinenprofils Folgendes umfasst:
Erfassen eines virtuellen Maschinenprofils (14), das die maximale Ausführungszeit mit individuellen Operationen in Beziehung bringt.

4. Verfahren nach Anspruch 1, wobei das Erfassen des virtuellen Maschinenprofils Folgendes umfasst:
Erfassen eines virtuellen Maschinenprofils (14), das die minimale Ausführungszeit mit individuellen Operationen in Beziehung bringt.

5. Verfahren nach Anspruch 1, wobei das Erfassen des virtuellen Maschinenprofils Folgendes umfasst:
Erfassen eines virtuellen Maschinenprofils (14), das den Energieverbrauch mit individuellen Operationen in Beziehung bringt.

6. Verfahren nach Anspruch 1, wobei das Erfassen des virtuellen Maschinenprofils Folgendes umfasst:
Erzeugen eines virtuellen Maschinenprofils (14), welches das Leistungsmerkmal während der Ausführung eines Benchmark-Programms (18) auf dem Zielgerät (16) misst.

7. Verfahren nach Anspruch 1, wobei das Erfassen des virtuellen Maschinenprofils (14) Folgendes umfasst:
Herunterladen eines vorher erzeugten virtuellen Maschinenprofils (14), welches das Leistungsmerkmal während der Ausführung eines Benchmark-Programms (18) auf dem Zielgerät (16) misst.

8. Verfahren nach einem der Ansprüche 1-7, wobei das Erfassen des Applikationsprofils (10) Folgendes umfasst:
Erzeugen eines Applikationsprofils, das angibt, wie oft jede unterschiedliche Operation während der Ausführung des angegebenen Teils der Applikation (12) auf einer Applikations-Entwicklungsplattform ausgeführt wird, und Herunterladen des erzeugten Applikationsprofils zu dem Zielgerät (16).

9. Verfahren nach einem der Ansprüche 1-7, wobei das Erfassen des Applikationsprofils Folgendes umfasst:
Erzeugen eines Applikationsprofils (10), das angibt, wie oft jede unterschiedliche Operation während der Ausführung des angegebenen Teils der Applikation (12) bei der ersten Ausführung der Applikation (12) auf dem Zielgerät ausgeführt wird.

10. Verfahren nach einem der Ansprüche 8 oder 9, das ferner Folgendes umfasst:
Erzeugen einer Vielzahl von Applikationsprofilen (10), wobei unterschiedliche Betriebsbedingungen durch unterschiedliche Applikationsprofile (10) aufgenommen werden.

11. Vorrichtung zum Abschätzen der Leistung für einen angegebenen Teil einer Applikation (12), wobei der angegebene Teil alles oder einen Teil der Applikation (12) enthalten kann, die über eine virtuelle Maschinenschnittstelle auf einem Zielgerät (16) ausgeführt wird, dessen Schaltkreise Schaltkreise umfasst, die vorgesehen sind, um ein Applikationsprofil (10) zu erfassen, das angibt, wie oft jede unterschiedliche Operation während der Ausführung des angegebenen Teils der Applikation (12) ausgeführt wird, wobei das Profil jeweils einen Dateneintrag für jeden Bytecode außer weit, einen Eintrag für jeden weiten abhängigen Bytecode, einen Eintrag für jeden Bytecode mit nativem Aufruf und einen Eintrag für jedes native Verfahren der virtuellen Maschine umfasst, und wobei das Applikationsprofil (10) Klassendateien darstellt, die über ein Netzwerk herunterladbar sind;
Schaltkreise, die vorgesehen sind, um ein virtuelles Maschinenprofil (14) zu erfassen, das Informationen angibt, die indikativ für ein Leistungsmerkmal der Zielgeräte-Hardware (16) für jede Operation der Applikation (12) sind, wobei das virtuelle Maschinenprofil (14) Klassendateien darstellt, die über ein Netzwerk herunterladbar sind; und
Schaltkreise, die vorgesehen sind, um die Anzahl der Ausführungen jeder Operation während der Ausführung des angegebenen Teils der Applikation zu multiplizieren, wie im Applikationsprofil (10) durch das Leistungsmerkmal für die betreffende Operation angegeben, wie im virtuellen Maschinenprofil (14) angegeben, und um die Ergebnisse für alle Operationen zu summieren, um eine Leistungsschätzung (20) für den angegebenen Teil der Applikation (12) zu erzeugen.

12. Vorrichtung nach Anspruch 11, wobei die Schaltkreise, die dazu vorgesehen sind, ein virtuelles Maschinenprofil (14) zu erfassen, Schaltkreise umfassen, die dazu vorgesehen sind, ein virtuelles Maschinenprofil (14) zu erfassen, das die durchschnittliche Ausführungszeit mit individuellen Operationen in Beziehung bringt.

13. Vorrichtung nach Anspruch 11, wobei die Schaltkreise, die dazu vorgesehen sind, ein virtuelles Maschinenprofil (14) zu erfassen, Schaltkreise umfassen, die dazu vorgesehen sind, ein virtuelles Maschinenprofil (14) zu erfassen, das die maximale Ausführungszeit mit individuellen Operationen in Beziehung bringt.

14. Vorrichtung nach Anspruch 11, wobei die Schaltkreise, die dazu vorgesehen sind, ein virtuelles Maschinenprofil (14) zu erfassen, Schaltkreise umfassen, die dazu vorgesehen sind, ein virtuelles Maschinenprofil (14) zu erfassen, das die minimale Ausführungszeit mit individuellen Operationen in Beziehung bringt.

15. Vorrichtung nach Anspruch 11, wobei die Schaltkreise, die dazu vorgesehen sind, ein virtuelles Maschinenprofil (14) zu erfassen, Schaltkreise umfassen, die dazu vorgesehen sind, ein virtuelles Maschinenprofil (14) zu erfassen, das den Energieverbrauch mit individuellen Operationen in Beziehung bringt.

16. Vorrichtung nach Anspruch 11, wobei die Schaltkreise, die dazu vorgesehen sind, ein virtuelles Maschinenprofil (14) zu erfassen, Schaltkreise umfassen, die dazu vorgesehen sind, ein virtuelles Maschinenprofil (14) zu erzeugen, welches das Leistungsmerkmal während der Ausführung eines Benchmark-Programms (18) auf dem Zielgerät misst.

17. Vorrichtung nach Anspruch 11, wobei die Schaltkreise, die dazu vorgesehen sind, ein virtuelles Maschinenprofil (14) zu erfassen, Schaltkreise umfassen, die dazu vorgesehen sind, ein zuvor erzeugtes virtuelles Maschinenprofil (14) herunterzuladen, welches das Leistungsmerkmal während der Ausführung eines Benchmark-Programms (18) auf dem Zielgerät misst.

18. Vorrichtung nach einem der Ansprüche 11-17, wobei die Schaltkreise, die dazu vorgesehen sind, ein Applikationsprofil (10) zu erfassen, Schaltkreise umfassen, die dazu vorgesehen sind, ein Applikationsprofil (10) zu erzeugen, das angibt, wie oft jede unterschiedliche Operation während der Ausführung des angegebenen Teils der Applikation (12) auf einer Applikations-Entwicklungsplattform ausgeführt wird, und um das erzeugte Applikationsprofil zu dem Zielgerät (16) herunterzuladen.

19. Vorrichtung nach einem der Ansprüche 11-17, wobei die Schaltkreise, die dazu vorgesehen sind, ein Applikationsprofil (10) zu erfassen, Schaltkreise umfassen, die dazu vorgesehen sind, ein Applikationsprofil (10) zu erzeugen, das angibt, wie oft jede unterschiedliche Operation während der Ausführung des angegebenen Teils der Applikation (12) bei der ersten Ausführung der Applikation (12) auf dem Zielgerät ausgeführt wird.

20. Vorrichtung nach einem der Ansprüche 18 oder 19, die Schaltkreise umfasst, die dazu vorgesehen sind, eine Vielzahl von Applikationsprofilen (10) zu erzeugen, wobei unterschiedliche Betriebsbedingungen durch unterschiedliche Applikationsprofile (10) aufgenommen werden.

## Revendications

1. Procédé d'estimation des performances pour une partie spécifiée d'une application (12), où ladite partie spécifiée peut comprendre tout ou partie de ladite application (12), qui s'exécute sur un dispositif cible par le biais d'une interface de machine virtuelle, ledit procédé comprenant :
l'acquisition d'un profil d'application (10) qui spécifie le nombre de fois que chaque opération différente est exécutée pendant l'exécution de ladite partie spécifiée de ladite application (12) dans lequel ledit profil d'application comprend une entrée de données pour chaque octet de code sauf une donnée large, une entrée pour chaque large code d'octet dépendant, une entrée pour chaque code d'octet d'appel natif et une entrée pour chaque procédé natif de la machine virtuelle et dans lequel le profil d'application (10) est un fichier de classe téléchargeable sur un réseau ;
l'acquisition d'un profil de machine virtuelle (14) qui spécifie une information indiquant une caractéristique de performance du matériel de dispositif cible (16) pour chaque opération de ladite application (12) ;
dans lequel ledit profil de machine virtuelle (14) est un fichier de classe téléchargeable sur un réseau ; et
la multiplication du nombre de fois que chaque opération est exécutée pendant l'exécution de ladite partie spécifiée de ladite application comme spécifié dans ledit profil d'application (10) par ladite caractéristique de performance pour cette opération comme spécifié dans ledit profil de machine virtuelle (14) et l'addition des résultats pour toutes les opérations afin de générer une estimation de performance (20) pour ladite partie spécifiée de ladite application (12).

2. Procédé selon la revendication 1, dans lequel l'acquisition dudit profil de machine virtuelle (14) comprend :
l'acquisition d'un profil de machine virtuelle (14) qui relie le temps d'exécution moyen à des opérations individuelles.

3. Procédé selon la revendication 1, dans lequel l'acquisition dudit profil de machine virtuelle comprend :
l'acquisition d'un profil de machine virtuelle (14) qui relie le temps d'exécution maximal à des opérations individuelles.

4. Procédé selon la revendication 1, dans lequel l'acquisition dudit profil de machine virtuelle comprend :
l'acquisition d'un profil de machine virtuelle (14) qui relie le temps d'exécution minimal à des opérations individuelles.

5. Procédé selon la revendication 1, dans lequel l'acquisition dudit profil de machine virtuelle comprend :
l'acquisition d'un profil de machine virtuelle (14) qui relie la consommation d'énergie à des opérations individuelles.

6. Procédé selon la revendication 1, dans lequel l'acquisition dudit profil de machine virtuelle comprend :
la génération d'un profil de machine virtuelle (14) qui mesure ladite caractéristique de performance pendant l'exécution d'un programme de référence (18) sur ledit dispositif cible (16).

7. Procédé selon la revendication 1, dans lequel l'acquisition dudit profil de machine virtuelle (14) comprend :
le téléchargement d'un profil de machine virtuelle (14) précédemment généré qui mesure ladite caractéristique de performance pendant l'exécution d'un programme de référence (18) sur ledit dispositif cible (16).

8. Procédé selon une quelconque des revendications 1 à 7, dans lequel l'acquisition dudit profil d'application (10) comprend :
la génération d'un profil d'application qui spécifie le nombre de fois que chaque opération différente est exécutée pendant l'exécution de la partie spécifiée de l'application (12) sur une plateforme de développement d'application et le téléchargement du profil d'application généré sur le dispositif cible (16).

9. Procédé selon une quelconque des revendications 1 à 7, dans lequel l'acquisition dudit profil d'application comprend :
la génération d'un profil d'application (10) qui spécifie le nombre de fois que chaque opération différente est exécutée pendant l'exécution de la partie spécifiée de l'application (12) à la première exécution de l'application (12) sur le dispositif cible.

10. Procédé selon l'une quelconque des revendications 8 ou 9, comprenant en outre :
la génération d'une pluralité de profils d'application (10), dans lequel différentes conditions de fonctionnement sont prises en charge par différents profils d'application (10) .

11. Appareil pour estimer la performance d'une partie spécifiée d'une application (12), où ladite partie spécifiée peut comprendre tout ou partie de ladite application (12), qui s'exécute sur un dispositif cible (16) par le biais d'une interface de machine virtuelle, dont les circuits comprennent des circuits agencés pour acquérir un profil d'application (10) qui spécifie le nombre de fois que chaque opération différente est exécutée pendant l'exécution de ladite partie spécifiée de ladite application (12) dans lequel ledit profil comprend une entrée de données pour chaque octet de code sauf une donnée large, une entrée pour chaque large code d'octet dépendant, une entrée pour chaque code d'octet d'appel natif et une entrée pour chaque procédé natif de la machine virtuelle et dans lequel ledit profil d'application (10) est un fichier de classe téléchargeable sur un réseau ;
des circuits conçu pour acquérir un profil de machine virtuelle (14) qui spécifie des informations indiquant une caractéristique de performance du matériel de dispositif cible (16) pour chaque opération de ladite application (12) dans lequel ledit profil de machine virtuelle (14) est un fichier de classe téléchargeable sur un réseau ; et
des circuits agencés pour multiplier le nombre de fois que chaque opération est exécutée pendant l'exécution de ladite partie spécifiée de ladite application comme spécifié dans ledit profil d'application (10) par la caractéristique de performance pour cette opération comme spécifié dans ledit profil de machine virtuelle (14) et additionner les résultats pour toutes les opérations afin de générer une estimation de performance (20) pour ladite partie spécifiée de ladite application (12).

12. Appareil selon la revendication 11, dans lequel lesdits circuits agencés pour acquérir un profil de machine virtuelle (14) comprennent des circuits agencés pour acquérir un profil de machine virtuelle (14) qui relie un temps d'exécution moyen à des opérations individuelles.

13. Appareil selon la revendication 11, dans lequel lesdits circuits agencés pour acquérir un profil de machine virtuelle (14) comprennent des circuits agencés pour acquérir un profil de machine virtuelle (14) qui relie un temps d'exécution maximal à des opérations individuelles.

14. Appareil selon la revendication 11, dans lequel lesdits circuits agencés pour acquérir un profil de machine virtuelle (14) comprennent des circuits agencés pour acquérir un profil de machine virtuelle (14) qui relie un temps d'exécution minimal à des opérations individuelles.

15. Appareil selon la revendication 11, dans lequel lesdits circuits agencés pour acquérir un profil de machine virtuelle (14) comprennent des circuits agencés pour acquérir un profil de machine virtuelle (14) qui relie la consommation d'énergie à des opérations individuelles.

16. Appareil selon la revendication 11, dans lequel lesdits circuits agencés pour acquérir un profil de machine virtuelle (14) comprennent des circuits agencés pour générer un profil de machine virtuelle (14) qui mesure ladite caractéristique de performance pendant l'exécution d'un programme de référence (18) sur ledit dispositif cible.

17. Appareil selon la revendication 11, dans lequel lesdits circuits agencés pour acquérir un profil de machine virtuelle (14) comprennent des circuits agencés pour télécharger un profil de machine virtuelle (14) précédemment généré qui mesure ladite caractéristique de performance pendant l'exécution d'un programme de référence (18) sur ledit dispositif cible.

18. Appareil selon l'une quelconque des revendications 11 à 17, dans lequel lesdits circuits agencés pour acquérir un profil d'application (10) comprennent des circuits agencés pour générer un profil d'application (10) qui spécifie le nombre de fois que chaque opération différente est exécutée pendant l'exécution de la partie spécifiée de l'application (12) sur une plateforme de développement d'application et pour télécharger le profil d'application généré sur le dispositif cible (16).

19. Appareil selon l'une quelconque des revendications 11 à 17, dans lequel lesdits circuits agencés pour acquérir un profil d'application (10) comprennent des circuits agencés pour générer un profil d'application (10) qui spécifie le nombre de fois que chaque opération différente est exécutée pendant l'exécution de la partie spécifiée de l'application (12) lors de première exécution de l'application (12) sur le dispositif cible.

20. Appareil selon l'une quelconque des revendications 18 ou 19, comprenant des circuits agencés pour générer une pluralité de profils d'application (10), dans lequel différentes conditions de fonctionnement sont prises en charge par différents profils d'application (10).
